# EUROPEAN PATENT SPECIFICATION

(11) **EP 1 482 207 B1**
(45) Date of publication and mention of the grant of the patent: **01.09.2010**
(21) Application number: 04012562.7
(22) Date of filing: 27.05.2004
(51) Int. Cl.: F16H 37/06

(54) **Transmission unit for hose reel sprinklers**
Getriebe für den Trommel eines Sprinklersschlauchs
Transmission pour tambour d'un tuyan flexible d'arroseur

(30) Priority: 30.05.2003 IT MO20030161
(43) Date of publication of application: 01.12.2004
(73) Proprietor: Comer Industries S.p.A., 20145 Milano (IT)
(72) Inventor: Mora, Fausto, 46029 Suzzara (Prov. of Mantova) (IT); Garuti, Matteo, 41012 Carpi (Prov. of Modena) (IT)
(74) Representative: Modiano, Micaela Nadia

(56) References cited:
- GB-A- 652 586
- US-A- 2 940 321
- US-A- 5 090 268

## Description

The present invention relates to a transmission unit for hose reel sprinklers.

It is known that hose reel sprinklers are agricultural machines used to distribute water, fertilizer, manure, slurry or other fluids on soil.

A hose reel sprinkler is substantially constituted by a truck that supports a reel, which can rotate about its own longitudinal axis and on which a hose made of flexible material is wound; the inlet end of the hose is associated with a supply of the fluid to be distributed and the outlet end is associated with an ejection nozzle, which is supported by a cart.

Before irrigation begins, the cart is disconnected from the truck and is towed over the ground in order to unwind the hose from it.

The reel is associated with a transmission unit, which is adapted to turn it in order to rewind the hose unwound on the ground; rewinding is generally performed during irrigation by means of a reverse motion of the cart toward the truck.

The transmission unit is substantially constituted by a drive, which is associated with the reel with the interposition of a unit for reducing the rotation rate with one or more speeds.

The drive is of the turbine or hydraulic motor type, and in the first case it is actuated by means of the fluid to be distributed and is inserted along a duct in which the inlet is associated with the supply of the fluid and the outlet is associated with the inlet end of the hose; there is also a circuit for bypassing the drive, which allows to throttle the flow-rate of fluid directed toward said drive in order to adjust the power it generates.

The reduction unit is of the type with gears and parallel axes; in particular, the input shaft, which is associated with the drive, is parallel to the output shaft, which is associated with the reel.

The reduction unit can be provided with gear shifting elements, and one of its intermediate shafts, generally the one that transmits motion directly to the output shaft, is provided with a device for coupling to an external power take-off (so-called PTO or power take-off shaft), which draws power for example from a tractor and is used to rapidly rewind the hose that is still on the ground after interrupting the flow of fluid.

Therefore, the hose can be rewound onto the reel in a so-called slow or quick mode, depending on whether the power is generated respectively by the drive or by the PTO.

The slow mode is the normal working condition, during which the fluid is distributed on the soil; the fast mode is used at the end of the irrigation or in case of unexpected situations in order to rewind the hose that still partially lies on the ground.

These transmission units of known hose reel sprinklers are not free from drawbacks, including the fact that once they are assembled they have substantial dimensions, restrict maneuvering spaces, and hinder the transport and handling of the sprinkler as a whole, due to their significant axial width.

Moreover, known transmission units reduce the possibility to couple additional auxiliary user devices and force the adoption of highly complicated and articulated configurations of the circuits for feeding the fluid to be distributed, which have a plurality of connections and bends, with consequent unwanted increases in distributed and concentrated load losses.

Moreover, these drawbacks are increased if it is necessary to allow reversing of the direction of rotation of the output shaft, since it is necessary to insert an auxiliary intermediate idle shaft in the reduction unit with parallel axes.

Another drawback of known transmission units is the fact that the PTO shaft of reduction units is turned even during so-called slow-mode rewinding, and this, in view of the fact that a braking device is generally fitted thereon, causes a disadvantageous dissipative power absorption and therefore a reduction in the torque actually available on the output shaft or, in an equivalent manner, an increase in the torque that must be generated by the drive.

Further, since the braking device is generally of the belt type with a preloading spring, power absorption fluctuates over time, since it is affected by the elongation and contraction of the preloading spring; this fluctuation leads to a disadvantageously uneven operation of the turbine, whose rotation rate is not constant.

The PTO shaft of known transmission units protrudes outside the machine body and therefore its rotation implies a safety problem.

Before performing fast-mode rewinding, furthermore, it is necessary to interrupt the kinematic chain inside the reduction unit in order to avoid turning the axles upstream of the PTO shaft at speeds so high that they may cause breakage and damage; this interruption is performed manually by operators, and if it is performed incorrectly or not performed at all, damage or breakage ensues.

Another disadvantage of known transmission units consists of the fact that their maintenance is very complicated, laborious and slow; it in fact requires operations for disassembly, assembly, opening and intervention inside the housing that contains the reduction units.

The reduction units of known transmission units, moreover, lack so-called synchronization devices for the engagement and disengagement of the complementary gear pairs that determine the speeds of the gearbox.

Every time it is necessary to change speed, it is therefore necessary to interrupt the motion of the drive in order to work in stopped conditions, so as to avoid damaging impacts and slippage between the teeth of the pairs of complementary gears; this method of operation therefore entails disadvantageous wastes of time.

It is noted that this refinement is not always sufficient; even in stopped conditions, the teeth of one of the complementary gears of a pair may in fact face the teeth, instead of the spaces, of the other gear; in this case, it is necessary to temporarily restart the drive in order to try to arrange the two complementary gears in a relative configuration that allows meshing of the teeth of one gear with the spaces of the other gear without impacts or slippage; accordingly, this entails performing additional operations on the part of users and additional wastes of time.

The impacts and slippage between the teeth of the gears further cause disadvantageous damage and wear, requiring very frequent maintenance and/or replacements of the various components and/or an over sizing of said components, with a consequent increase in the dimensions and overall weight of known transmission units.

GB 652 586 discloses a reduction gear unit having a combination of features as set forth in the pre-characterizing portion of the appended claim 1.

The aim of the present invention is to eliminate the above-mentioned drawbacks of known transmission units for hose reel sprinklers, by providing a transmission unit for hose reel sprinklers that is compact, having in particular a reduced axial width, and is simple, quick and easy to install and maintain.

Within this aim, an object of the present invention is to provide a transmission unit for hose reel sprinklers that once installed leaves more space free for maneuvering, arranging and coupling optional auxiliary user devices, allows to facilitate transport and handling of sprinklers as a whole, allows to simplify the configuration of the circuits for supplying the fluid to be distributed, and accordingly allows to reduce load losses along it.

Other objects of the present invention are to provide a transmission unit that allows to modify simply and with limited space occupation the direction of rotation of the output shaft, to limit dissipative power absorptions and to ensure uniform operation of the drive.

Another object of the present invention is to improve the safety and integrity of transmission units both when they are used by drawing power from the PTO shaft for fast-mode rewinding and when they are used with slow-mode rewinding.

Finally, further objects of the present invention are to allow to change speed in a short time and even during motion transmission, i.e., while the drive is moving, without producing mutual slippage or impacts between the transmission elements, to allow to reduce wear and damage and contain the oversizing, dimensions and weight of the various transmission elements, and to limit interventions for maintaining and/or replacing them.

Another object of the present invention is to provide a transmission unit that is simple, relatively easy to provide in practice, safe in use, effective in operation, and has a relatively low cost.

In accordance with the present invention, there is provided a transmission unit for hose reel sprinklers as defined in the appended claims.

Further characteristics and advantages of the present invention will become better apparent from the detailed description of a preferred but not exclusive embodiment of a transmission unit for hose reel sprinklers, illustrated by way of non-limiting example in the accompanying drawings, wherein:
Figure 1 is a schematic axonometric view of a transmission unit for hose reel sprinklers according to the invention;

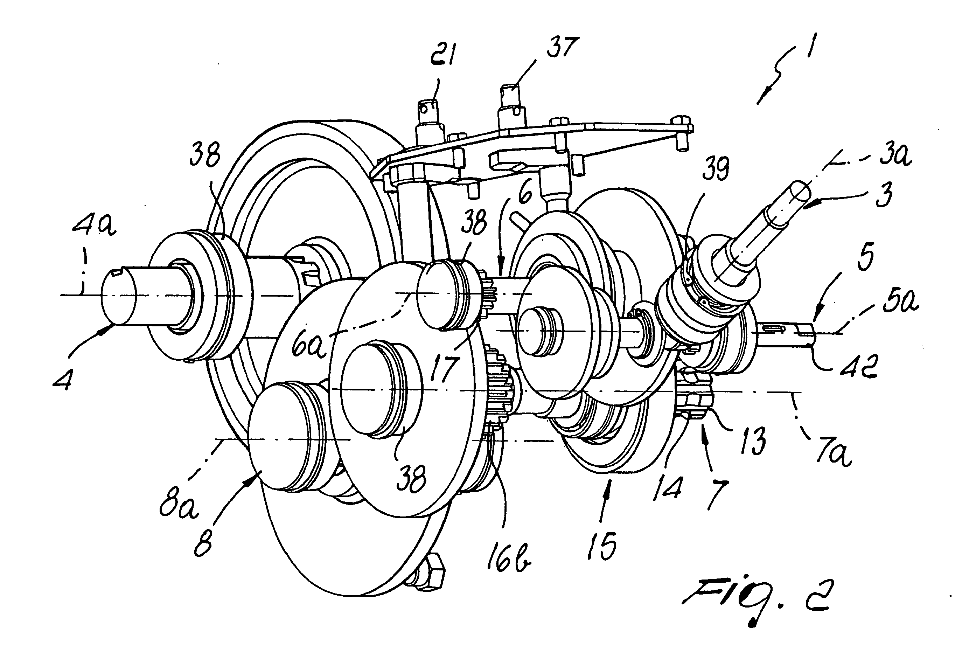

Figure 2 is a schematic perspective cutout view of the unit of Figure 1;

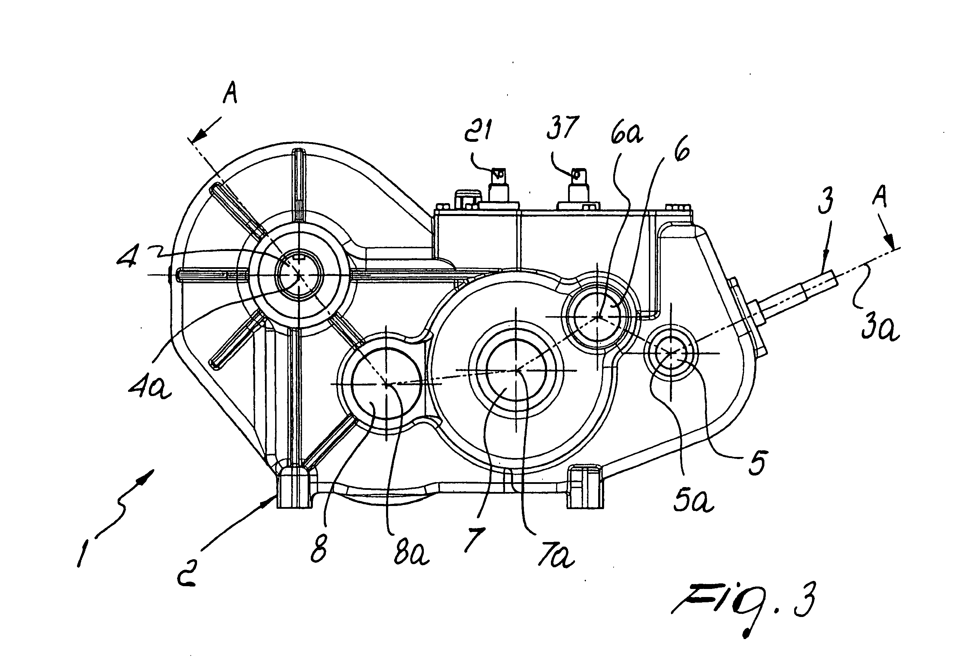

Figure 3 is a schematic front view of the unit of Figure 1;
Figure 4 is a schematic sectional view, taken along the line A-A of Figure 3, of the unit according to the invention in a first active configuration;
Figure 5 is a schematic sectional view, taken along the line A-A of Figure 3, of the unit according to the invention in a second active configuration;
Figure 6 is a schematic sectional view, taken along the line A-A of Figure 3, of the unit according to the invention in a third active configuration;
Figure 7 is a schematic sectional view of an alternative embodiment of the unit according to the invention;

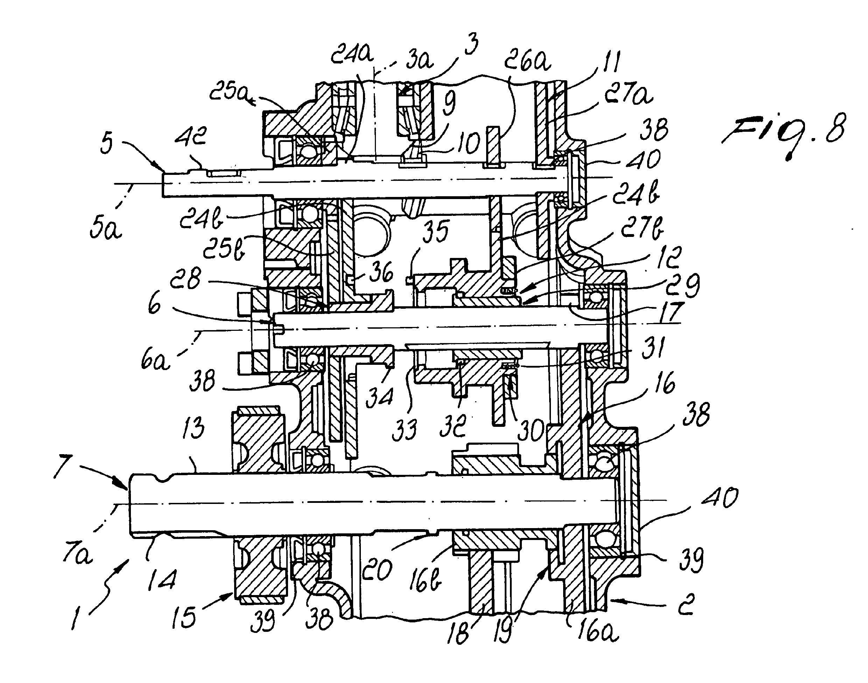

Figure 8 is an enlarged-scale view of a detail of Figure 5.

With reference to the figures, the reference numeral 1 generally designates a transmission unit for hose reel sprinklers.

The unit 1 comprises a box-like structure 2 for supporting and containing an ordinary gear train, which comprises: a driving shaft 3, which is associable with a hydraulic drive of a hose reel sprinkler; a driven shaft 4, which is associable with the reel of the sprinkler and is adapted to turn it about its own longitudinal axis; and a plurality of intermediate shafts interposed between the driving shaft 3 and the driven shaft 4 in order to reduce gradually the rotation rate and accordingly increase the torque from one to the other.

The hose reel sprinkler is not shown, since it is of a known type; the hydraulic drive can be constituted by a turbine in which the impeller is keyed on the driving shaft 3.

In the particular embodiment shown, there are four intermediate shafts; starting from the driving shaft 3 and proceeding toward the driven shaft 4, they comprise in succession and in a cascade configuration a first intermediate shaft 5, a second intermediate shaft 6, a third intermediate shaft 7, and a fourth intermediate shaft 8.

The axis 3a of the driving shaft 3 and the axis 4a of the driven shaft 4 are mutually oblique or convergent, but are not parallel, the axis 4a of the driven shaft 4 being substantially parallel to the longitudinal axis of the reel of the sprinkler.

The axes of the four intermediate shafts 5-8, designated by the outlines 5a, 6a, 7a and 8a respectively, are instead substantially parallel to the axis 4a of the driven shaft 4; in particular, the axis 5a of the first intermediate shaft 5 converges with the axis 3a of the driven shaft 3, motion transmission being provided between them by means of a bevel gear pair, which comprises a first bevel gear 9 that is mounted at the end of the conducting shaft 3 and meshes with a complementary second bevel gear 10 that is keyed, on the first intermediate shaft 5.

Motion is transmitted between the intermediate shafts 5-8 and the driven shaft 4 by way of cylindrical gear pairs.

In particular, transmission of motion between the first intermediate shaft 5 and the second intermediate shaft 6 occurs by way of a rotation rate variation device 11 of the discontinuous gear-based type, which in the illustrated embodiment is of the four-speed type.

Advantageously, the variation device 11 is associated with a synchronization device 12, which is adapted to allow gradual engagement of the speeds, avoiding impacts among the various gears and therefore allowing engagement of the speeds even while the axes are rotating and under load.

The third intermediate shaft 7 is a so-called PTO shaft, since it is provided with a shank 13 that protrudes outside the box-like structure 2 and on which there is a coupling 14 for connection to a coupling for drawing external power (power take-off), for example from a tractor.

A braking device 15 of the belt type is fitted at the shank 13.

A gear system 16 is mounted so that it can rotate freely on the third intermediate shaft 7 (PTO) and transmits motion from the second intermediate shaft 6 to the fourth intermediate shaft 8, the third intermediate shaft 7 (PTO) remaining motionless during slow-mode rewinding.

The gear system 16 comprises a first gear 16a, which is fixed axially and meshes with a complementary pinion 17 formed on the previous second intermediate shaft 6, and a second gear 16b or pinion, which is mounted so that it can slide axially along the third intermediate shaft 7 (PTO) with respect to the first gear 16a and meshes with a complementary gear 18 that is keyed on the subsequent fourth intermediate shaft 8.

A first engagement and disengagement device 19, of the type with radial teeth, is formed between the first gear 16a and the second gear 16b and is respectively adapted to couple them so that they rotate monolithically and to disengage them so that they rotate freely with respect to each other.

A second engagement and disengagement device 20 of the type with radial teeth is formed between the second gear 16b and the third intermediate shaft 7 (PTO), and is adapted respectively to rotationally couple them and allow their mutual free rotation.

A first lever 21 actuates the sliding of the second gear 16b and accordingly the alternative engagement and disengagement of the first and second engagement and disengagement devices 19 and 20.

A respective pinion 22 is formed on the fourth intermediate shaft 8 and meshes with a complementary gear 23 that is keyed to the driven shaft 4.

The four-speed variation device 11 comprises four cylindrical gears 24a, 25a, 26a and 27a, which are formed or keyed on the first intermediate shaft 5 and correspond respectively to the first, second, third and fourth gears (increasing rotation rate from the first gear to the fourth gear) and are adapted to mesh with four complementary cylindrical gears 24a, 25b, 26b and 27b formed or coupled on the second intermediate shaft 6.

A first bush 28 is mounted on the second intermediate shaft 6 so that it can rotate freely and is axially fixed, and the complementary gear 25b for the second speed is rigidly mounted thereon; the complementary first-speed gear 24b is fitted thereon so that it can rotate freely; the pairs of complementary first- and second-speed gears 24a-24b and 25a-25b are always mutually engaged.

The synchronization device 12 comprises a second bush 29, which is fitted so that it rotates monolithically with, and slides axially along, the second intermediate shaft 6; a sleeve 30 is fitted on the second shaft 29 so that it can rotate freely and integrally supports the complementary third- and fourth-speed gears 26b and 27b; the sleeve 30 slides with respect to the second intermediate shaft 6 rigidly with the second bush 29.

The synchronization device 12 further comprises elastic torsion means, such as a helical spring 31, which is interposed between the second bush 29 and the sleeve 30 so that the opposite ends are respectively rigidly coupled thereto, and means for stopping the relative rotation of the sleeve 30 with respect to the second bush 29, such as abutment teeth 32.

On the sleeve 30 there are also centripetal radial teeth 33, adapted to engage corresponding centrifugal radial teeth 34 formed on the first bush 28 for the engagement of the second speed, and a pin 35, which is adapted to engage in a corresponding seat 36 formed in the face of the complementary gear 24b for the engagement of the first speed.

A second lever 37 actuates the sliding of the sleeve 29 in order to allow to engage the chosen speed.

The box-like structure 2 has a plurality of bearings 38 for rotationally supporting the various shafts, sealing devices and protection devices 39, and closure lids 40, all of which are of a conventionally known type.

Advantageously, the first intermediate shaft 5 comprises an end 42, which protrudes externally from said box-like structure and on which a double auxiliary coupling is formed: one coupling for a hydraulic motor and one coupling for the access of an instrument that is suitable to force the rotation of the turbine so as to allow the exit of any solid impurities (stones or others) that have jammed inside it.

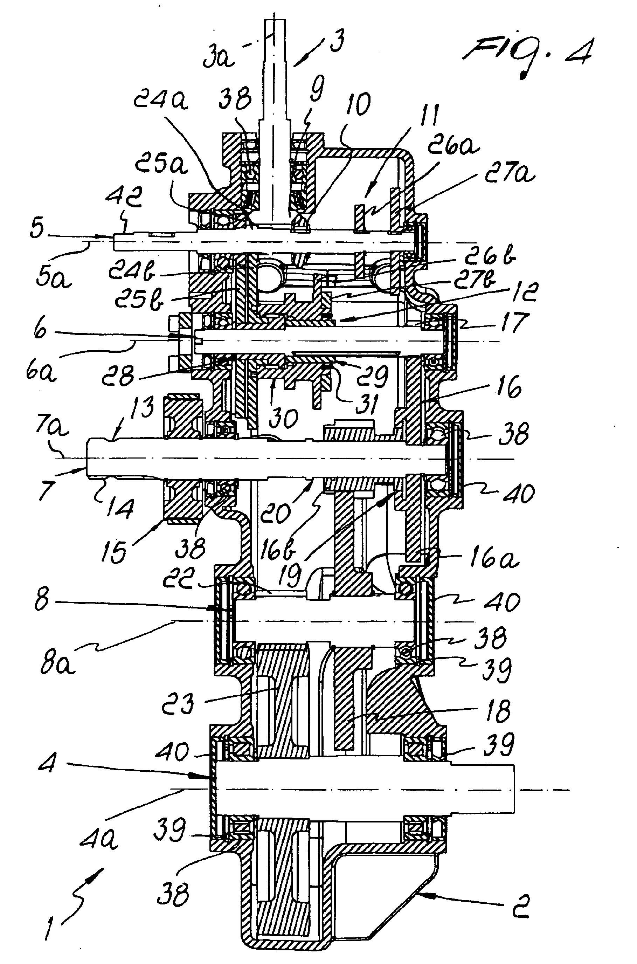

Figures 4 to 7 illustrate the unit 1 in various operating configurations.

In Figure 4, the unit 1 is in a first working configuration, in which the hose is rewound onto the reel of the sprinkler in the so-called slow mode, transmitting maximum torque to the driven shaft 4.

In this first configuration, the power in input to the unit 1 is drawn from the drive associated with the driving shaft 3, the speed variation device 11 is engaged in first speed (24a-24b), the first engagement and disengagement device 19 is engaged, and the second engagement and disengagement device 20 is disengaged; the power in input to the driving shaft 3 is transmitted with a gradual reduction of the rotation rate and an increase in torque to the driven shaft 4.

In this first configuration, the third intermediate shaft 7 (PTO) is rotationally motionless and the gear system 16 rotates freely thereon in order to transmit motion from the pinion 17 to the gear 18.

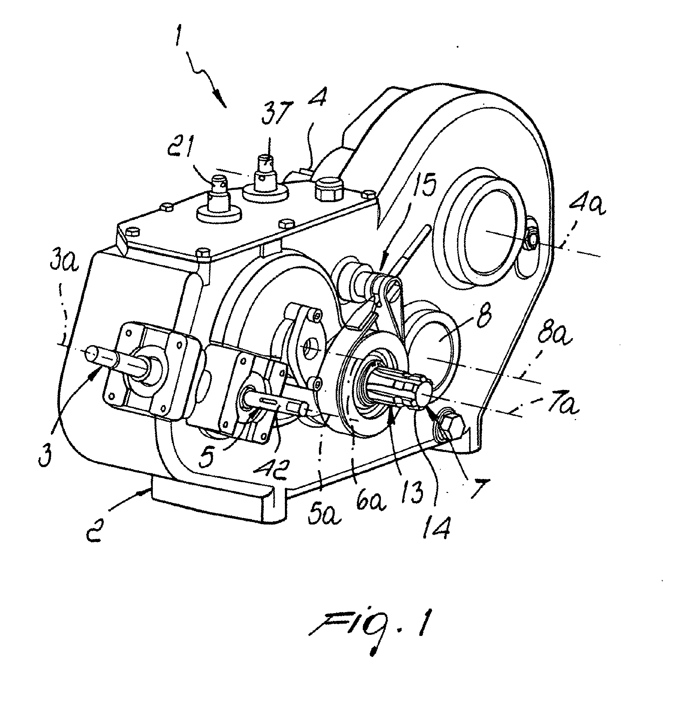

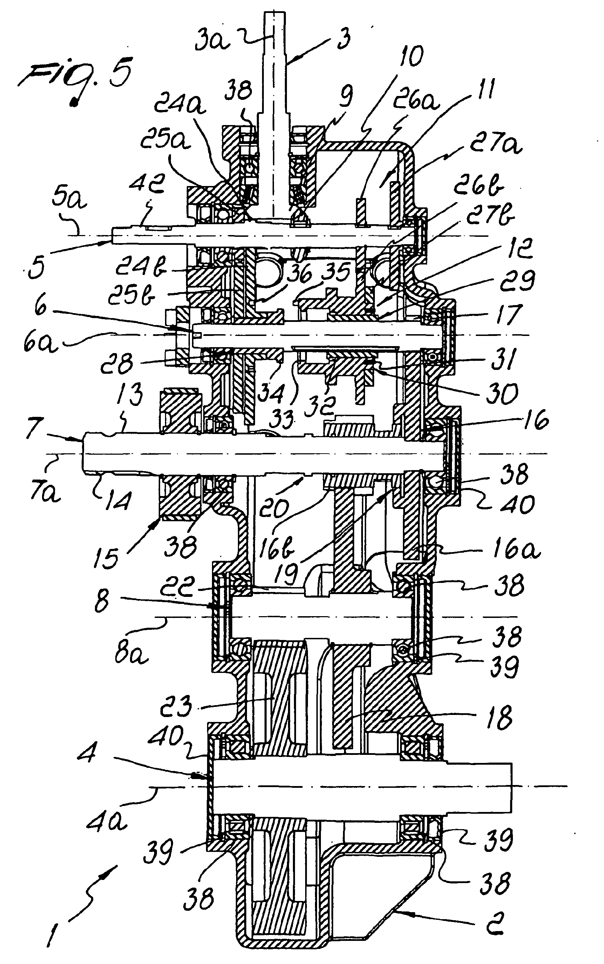

In Figure 5, the unit 1 is in a second working configuration, in which the hose is rewound onto the reel of the sprinkler, as in Figure 1, in the so-called slow mode but at a higher speed; the only difference with respect to the first configuration in fact is that the speed variation device 11 is engaged in third speed (26a-26b).

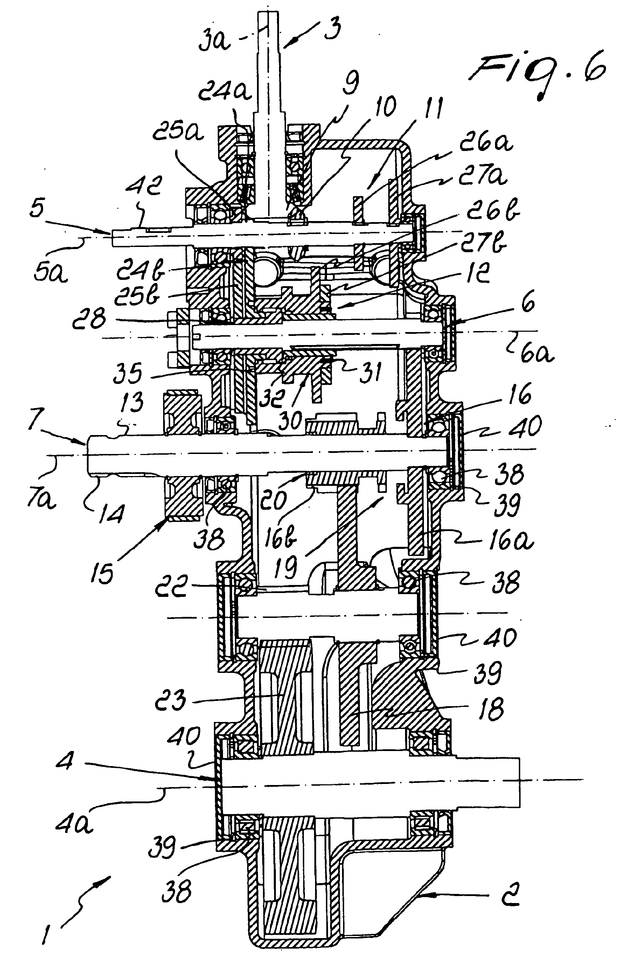

In Figure 6, instead, the unit 1 is in a third working configuration, in which the hose is rewound onto the reel of the sprinkler in a so-called fast mode, with transmission of maximum speed to the driven shaft 4.

In this third configuration, the power in input to the unit 1 is taken from the external power take-off PTO on the third intermediate shaft 7.

The first engagement and disengagement device 19 is disengaged and the driving shaft and the first two intermediate shafts 5 and 6 are therefore motionless.

The second engagement and disengagement device 20 is instead engaged and the motion in input on the third intermediate shaft 7 (PTO) is transmitted to the driven shaft 4 with a speed reduction.

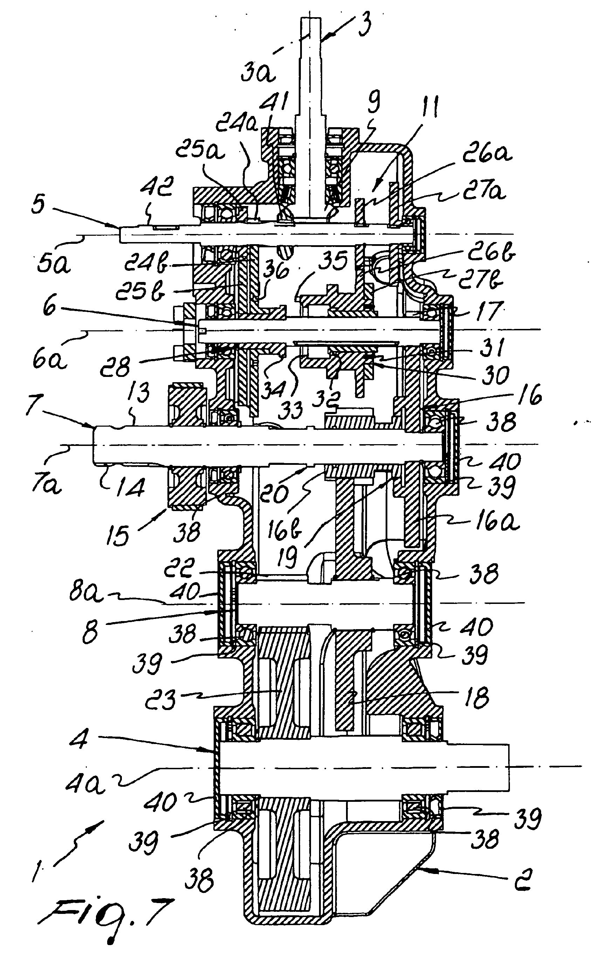

Figure 7 illustrates an alternative embodiment of the unit 1, in which a second auxiliary bevel gear 41 is fitted on the first output shaft 5, is arranged opposite the second bevel gear 10, and allows to reverse the rotation of the shafts of the unit 1.

In practice it has been found that the described invention achieves the intended aim and objects.

The possibility to arrange the drive (turbine) vertically, i.e., so that its axis is oblique or convergent with respect to the other axes, in fact allows to contain the axial dimensions of the assembly constituted by the reduction unit and the drive, to simplify the circuit for feeding the fluid to the drive and thus reduce the load losses that occur along it, to have easily available a plurality of auxiliary user devices, and to reverse the direction of motion simply.

The possibility to engage and disengage the transmission of motion to the PTO shaft allows to improve the safety and integrity of the entire unit in operation both in the slow mode and in the fast mode; in the slow mode, the PTO shaft is assuredly stopped, thus ensuring that there are no external rotating parts, and particularly the breaking device mounted thereon is assuredly stopped, consequently reducing the dissipated power and ensuring uniform speed of the turbine; in the fast mode, disengagement of the PTO shaft from the slower preceding shafts is instead ensured.

Moreover, the disassembly of the input shaft is facilitated, while the presence of the synchronization device allows to change speeds gradually and without interference even while the turbine is moving.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according the requirements without thereby abandoning the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A transmission unit (1) for hose reel sprinklers, comprising a box-like structure (2) for supporting and containing an ordinary gear train, which comprises a driving shaft (3) that is associable with a hydraulic drive of a hose reel sprinkler and a driven shaft (4) that is associable with the reel of said sprinkler and is adapted to turn it about its longitudinal axis, the axes (3a,4a) of said driving shaft (3) and of said driven shaft (4) being mutually oblique or convergent, **characterized in that** said gear train comprises at least one intermediate shaft (5-8) with an axis (5a-8a) that is substantially parallel to said axis (4a) of the driven shaft (4), one of said intermediate shafts (7) being a second input shaft.

2. The unit (1) according to claim 1, **characterized in that** said driven shaft (4) is substantially parallel to the longitudinal axis of said reel.

3. The unit (1) according to one or more of the preceding claims, **characterized in that** said gear train is designed to reduce the rotation rate from said driving shaft (3) to said driven shaft (4).

4. The unit (1) according to one or more of the preceding claims, **characterized in that** said gear train comprises a first said intermediate shaft (5) whose axis (5a) substantially converges with said axis (3a) of the driving shaft (3), a pair of complementary bevel gears (9,10) being formed between the driving shaft (3) and said first intermediate shaft (5).

5. The unit (1) according to claim 4, **characterized in that** it comprises a second intermediate shaft (6) successive to said first intermediate shaft (5), and a speed variation device (11) of the discontinuous gear-based type, said speed variation device (11) being formed between said successive first and second intermediate shafts (5,6).

6. The unit (1) according to claim 5, **characterized in that** it comprises a synchronization device (12) that is associated with said speed variation device (11).

7. The unit (1) according to claim 6, **characterized in that** said gear train further comprises a gear system (16) that is coaxial to said second input shaft (7), is associated with engagement and disengagement devices (19,20) and is adapted to alternatively and selectively connect said driving shaft (3) to said driven shaft (4) and said second input shaft (7) to said driven shaft (4).

8. The unit (1) according to claim 6, **characterized in that** said gear train further comprises a gear system (16) for transmitting motion from said driving shaft (3) to said driven shaft (4), which is mounted on said second input shaft (7) so that it can rotate freely.

9. The unit (1) according to claim 8, **characterized in that** said transmission gear system (16) mounted on the second input shaft (7) comprises a first gear (16a), which is fixed axially and is adapted to receive motion from said driving shaft (3) or from second input shaft (7), a second gear (16b), which is mounted so that it can slide axially along the second input shaft (7) with respect to the first gear (16a) and is adapted to transmit motion to said driven shaft (4) or to one (8) of said intermediate shafts, a first engagement and disengagement device (19), which is formed between said first gear (16a) and said second gear (16b) and is respectively adapted to couple them so that they rotate monolithically and disengage them so that they rotate freely with respect to each other, and a second engagement and disengagement device (20), which is respectively adapted to rotationally rigidly couple and rotationally disengage with respect to each other said second input shaft (7) and said second gear (16b), said first and second engagement and disengagement devices (19,20) being alternatively engaged and disengaged.

10. The unit (1) according to claim 6, **characterized in that** it comprises a third said intermediate shaft (7), which forms said second input shaft (7).

11. The unit (1) according to claim 10, **characterized in that** it comprises a fourth said intermediate shaft (8).

12. The unit (1) according to claim 11, **characterized in that** said first intermediate shaft (5) comprises an end (42) that protrudes externally from said box-like structure (2) and on which at least one auxiliary coupling is formed.

13. The unit (1) according to claim 6, **characterized in that** said synchronization device (12) comprises a bush (29), which is mounted so that it can rotate rigidly with, and slide axially on, said second intermediate shaft (6), and on which at least one gear of said speed variation device (11) is mounted so that it can rotate freely, said gear being suitable to mesh with a complementary gear that is mounted so as to rotate monolithically with, and is axially fixed to, said first intermediate shaft (5), elastic torsion means (31) interposed between said bush (29) and said gear mounted thereon, and means for stopping the relative rotation of the gear with respect to the bush (29).

14. The unit (1) according to claim 1, **characterized in that** said gear train comprises a first said intermediate shaft in which the axis is substantially oblique with respect to said driving shaft axis (3a).

## Patentansprüche

1. Transmissionseinheit (1) für Sprinklersahlauchtrommeln, mit einer kastenartigen Struktur (2) zum Abstützen und Aufnehmen eines normalen Getriebezuges, der eine Antriebswelle (3) umfaßt, der ein Hydraulikantrieb einer Sprinklerschlauchtrommel zugeordnet ist, und einer angetriebenen Welle (4), die der Sprinklerschlauchtrommel zugeordnet und befähigt ist, um ihre Längsachse zu drehen, wobei die Achsen (3a, 4a) der Antriebswelle (3) und der angetriebenen Welle (4) relativ zueinander geneigt oder konvergierend verlaufen, **dadurch gekennzeichnet, daß** der Getriebezug zumindest eine Zwischenwelle (5-8) mit einer Achse (5a-8a) aufweist, die im wesentlichen parallel zur Achse (4a) der angetriebenen Welle (4) verläuft, wobei eine der Zwischenwellen (7) eine zweite Eingangswelle ist.

2. Einheit (1) nach Anspruch 1, **dadurch gekennzeichnet, daß** die angetriebene Welle (4) im wesentlichen parallel zur Längsachse der Trommel verläuft.

3. Einheit (1) nach einem oder mehreren der vorhergehenden Ansprüche, **dadurch gekennzeichnet, daß** der Getriebezug so ausgebildet ist, daß er die Drehgeschwindigkeit von der Antriebswelle (3) auf die angetriebene Welle (4) reduziert.

4. Einheit (1) nach einem oder mehreren der vorhergehenden Anspruche, **dadurch gekennzeichnet, daß** der Getriebezug eine erste Zwischenwelle (5) aufweist, deren Achse (5a) im wesentlichen mit der Achse (3a) der Antriebswelle (3) konvergiert, wobei ein Paar von komplementären Kegelrädern (9, 10) zwischen der Antriebswelle (3) und der ersten Zwischenwelle (5) vorgesehen ist.

5. Einheit (1) nach Anspruch 4, **dadurch gekennzeichnet, daß** sie eine zweite Zwischenwelle (6) aufweist, die auf die erste Zwischenwelle (5) folgt, und eine Geschwindigkeitsänderungsvorrichtung (11) des diskontinuierlichen Getriebetyps, wobei die Geschwindigkeitsänderungsvorrichtung (11) zwischen den aufeinanderfolgenden ersten und zweiten Zwischenwellen (5, 6) gebildet ist.

6. Einheit (1) nach Anspruch 5, **dadurch gekennzeichnet, daß** sie eine Synchronisiervorrichtung (12) aufweist, die der Geschwindigkeitsänderungsvorrichtung (11) zugeordnet ist.

7. Einheit (1) nach Anspruch 6, **dadurch gekennzeichnet, daß** der Getriebezug ferner ein Getriebesystem (16) aufweist, das koaxial zur zweiten Eingangswelle (7) ist, der Eingriffs- und Außereingriffsvorrichtungen (19, 20) zugeordnet sind und die befähigt ist, alternativ und selektiv die Antriebswelle (3) mit der angetriebenen Welle (4) und die zweite Eingangswelle (7) mit der angetriebenen Welle (4) zu verbinden.

8. Einheit (1) nach Anspruch 6, **dadurch gekennzeichnet, daß** der Getriebezug ferner ein Getriebesystem (16) zum Übertragen der Bewegung von der Antriebswelle (3) auf die angetriebene Welle (4) aufweist, welches auf der zweiten Eingangswelle (7) so montiert ist, daß es frei drehen kann.

9. Einheit (1) nach Anspruch 8, **dadurch gekennzeichnet, daß** das Transmissionsgetriebesystem (16), das auf der zweiten Eingangswelle (7) montiert ist, ein erstes Zahnrad (16a), welches axial fixiert und befähigt ist, Bewegung von der Antriebswelle (3) oder von der zweiten Eingangswelle (7) zu erhalten, ein zweites Zahnrad (16b), welches so montiert ist, daß es axial entlang der zweiten Eingangswelle (7) bezüglich des ersten Zahnrades (16a) gleiten kann und so ausgebildet ist, daß es Bewegung auf die angetriebene Welle (4) oder eine (8) der Zwischenwellen überträgt, eine erste Eingriffs- und Außereingriffsvorrichtung (19), welche zwischen dem ersten Zahnrad (16a) und dem zweiten Zahnrad (16b) geformt und so ausgebildet ist, daß sie sie kuppelt, so daß sie monolithisch rotieren, und sie so freigibt, daß sie frei relativ zueinander drehen können, und eine zweite Eingriffs- und Außereingriffsvorrichtung (20) aufweist, die so ausgebildet ist, daß sie die zweite Eingangswelle (7) und das zweite Zahnrad (16b) drehstarr kuppeln und zur Drehung freigeben kann, wobei die erste und zweite Eingriffs- und Außereingriffsvorrichtung (19, 20) alternativ in Eingriff oder außer Eingriff sind.

10. Einheit (1) nach Anspruch 6, **dadurch gekennzeichnet, daß** sie eine dritte Zwischenwelle (7) aufweist, welche die zweite Eingangswelle (7) bildet.

11. Einheit (1) nach Anspruch 10, **dadurch gekennzeichnet, daß** sie eine vierte Zwischenwelle (8) aufweist.

12. Einheit (1) nach Anspruch 11, **dadurch gekennzeichnet, daß** die erste Zwischenwelle (5) ein Ende (42) umfaßt, welches von der kastenartigen Struktur (2) nach außen ragt und auf welchem zumindest eine Hilfskupplung ausgebildet ist.

13. Einheit (1) nach Anspruch 6, **dadurch gekennzeichnet, daß** die Synchronisiervorrichtung (12) eine Büchse (29) aufweist, die so montiert ist, daß sie starr mit der zweiten Zwischenwelle (6) drehen und axial auf dieser gleiten kann, und auf welcher zumindest ein Zahnrad der Geschwindigkeitsänderungsvorrichtung (11) so montiert ist, daß es frei drehen kann, wobei das Zahnrad geeignet ist, mit einem komplementären Zahnrad zu kämmen, welches so montiert ist, daß es monolithisch mit der ersten Zwischenwelle (5) dreht und axial an dieser fixiert ist, wobei elastische Torsionsmittel (31) zwischen der Büchse (29) und dem auf dieser montierten Zahnrad und Mittel zum Stoppen der Relativdrehung des Zahnrades bezüglich der Büchse (29) zwischengeschaltet sind.

14. Einheit (1) nach Anspruch 1, **dadurch gekennzeichnet, daß** der Getriebezug eine erste Zwischenwelle aufweist, in welcher die Achse im wesentlichen schräg bezüglich der Antriebswellenachse (3a) verläuft.

## Revendications

1. Unité de transmission (1) pour des asperseurs à dévidoir à tuyau flexible, comprenant une structure en forme de boîte (2) pour supporter et contenir un train d'engrenages ordinaire, qui comprend un arbre d'entraînement (3), qui peut être associé à un entraînement hydraulique d'un asperseur à dévidoir à tuyau flexible, et un arbre entraîné (4), qui peut être associé au dévidoir dudit asperseur et est adapté pour le tourner autour de son axe longitudinal, les axes (3a, 4a) dudit arbre d'entraînement (3) et dudit arbre entraîné (4) étant mutuellement obliques ou convergents, **caractérisée en ce que** ledit train d'engrenages comprend au moins un arbre intermédiaire (5 à 8) avec un axe (5a à 8a) qui est sensiblement parallèle audit axe (4a) de l'arbre entraîné (4), un desdits arbres intermédiaires (7) étant un second arbre d'entrée.

2. Unité (1) selon la revendication 1, **caractérisée en ce que** ledit arbre entraîné (4) est sensiblement parallèle à l'axe longitudinal dudit dévidoir.

3. Unité (1) selon une ou plusieurs des revendications précédentes, **caractérisée en ce que** ledit train d'engrenages est conçu pour réduire la vitesse de rotation dudit arbre d'entraînement (3) audit arbre entraîné (4).

4. Unité (1) selon une ou plusieurs des revendications précédentes, **caractérisée en ce que** ledit train d'engrenages comprend un premier dit arbre intermédiaire (5) dont l'axe (5a) converge sensiblement avec ledit axe (3a) de l'arbre d'entraînement (3), une paire d'engrenages coniques complémentaires (9, 10) étant formée entre l'arbre d'entraînement (3) et ledit premier arbre intermédiaire (5).

5. Unité (1) selon la revendication 4, **caractérisée en ce qu'**elle comprend un deuxième arbre intermédiaire (6) successif audit premier arbre intermédiaire (5), et un dispositif de variation de vitesse (11) du type à base d'engrenage discontinu, ledit dispositif de variation de vitesse (11) étant formé entre lesdits premier et deuxième arbres intermédiaires successifs (5, 6).

6. Unité (1) selon la revendication 5, **caractérisée en ce qu'**elle comprend un dispositif de synchronisation (12) qui est associé audit dispositif de variation de vitesse (11).

7. Unité (1) selon la revendication 6, **caractérisée en ce que** ledit train d'engrenages comprend en outre un système d'engrenages (16) qui est coaxial audit second arbre d'entrée (7), est associé à des dispositifs de prise et de séparation (19, 20) et est adapté pour relier en alternance et sélectivement ledit arbre d'entraînement (3) audit arbre entraîné (4) et ledit second arbre d'entrée (7) audit arbre entraîné (4).

8. Unité (1) selon la revendication 6, **caractérisée en ce que** ledit train d'engrenages comprend en outre un système d'engrenages (16) pour transmettre un mouvement dudit arbre d'entraînement (3) audit arbre entraîné (4), qui est monté sur ledit second arbre d'entrée (7) de sorte qu'il puisse tourner librement.

9. Unité (1) selon la revendication 8, **caractérisée en ce que** ledit système d'engrenages de transmission (16) monté sur le second arbre d'entrée (7) comprend un premier engrenage (16a), qui est fixe de façon axiale et est adapté pour recevoir un mouvement à partir dudit arbre d'entraînement (3) ou à partir du second arbre d'entrée (7), un second engrenage (16b), qui est monté de sorte qu'il puisse coulisser de façon axiale le long du second arbre d'entrée (7) par rapport au premier engrenage (16a) et est adapté pour transmettre un mouvement audit arbre entraîné (4) ou à un (8) desdits arbres intermédiaires, un premier dispositif de prise et de séparation (19), qui est formé entre ledit premier engrenage (16a) et ledit second engrenage (16b) et est respectivement adapté pour les accoupler de sorte qu'ils tournent de façon monolithique et les séparer de sorte qu'ils tournent librement l'un par rapport à l'autre, et un second dispositif de prise et de séparation (20), qui est respectivement adapté pour accoupler rigidement de façon rotative et séparer de façon rotative l'un par rapport à l'autre ledit second arbre d'entrée (7) et ledit second engrenage (16b), lesdits premier et second dispositifs de prise et de séparation (19, 20) étant en prise et séparés en alternance.

10. Unité (1) selon la revendication 6, **caractérisée en ce qu'**elle comprend un troisième dit arbre intermédiaire (7), qui forme ledit second arbre d'entrée (7).

11. Unité (1) selon la revendication 10, **caractérisée en ce qu'**elle comprend un quatrième dit arbre intermédiaire (8).

12. Unité (1) selon la revendication 11, **caractérisée en ce que** ledit premier arbre intermédiaire (5) comprend une extrémité (42) qui fait saillie de façon externe à partir de ladite structure en forme de boite (2) et sur laquelle au moins un accouplement auxiliaire est formé.

13. Unité (1) selon la revendication 6, **caractérisée en ce que** ledit dispositif de synchronisation (12) comprend une douille (29), qui est montée de sorte qu'elle puisse tourner de façon rigide avec, et coulisser de façon axiale sur, ledit deuxième arbre intermédiaire (6), et sur laquelle au moins un engrenage dudit dispositif de variation de vitesse (11) est monté de sorte qu'il puisse tourner librement, ledit engrenage étant approprié pour s'engrener avec un engrenage complémentaire qui est monté afin de tourner de façon monolithique avec ledit premier arbre intermédiaire (5), et est fixé de façon axiale à celui-ci, des moyens de torsion élastiques (31) interposés entre ladite douille (29) et ledit engrenage monté sur celle-ci, et des moyens pour arrêter la rotation relative de l'engrenage par rapport à la douille (29).

14. Unité (1) selon la revendication 1, **caractérisée en ce que** ledit train d'engrenages comprend un premier dit arbre intermédiaire dans lequel l'axe est sensiblement oblique par rapport audit axe d'arbre d'entraînement (3a).
